# NEUE EUROPÄISCHE PATENTSCHRIFT

(11) **EP 1 920 102 B2**
(45) Veröffentlichungstag und Bekanntmachung des Hinweises auf die Entscheidung über den Einspruch: **11.01.2017**
(45) Hinweis auf die Patenterteilung: 10.06.2009
(21) Anmeldenummer: 06763907.0
(22) Anmeldetag: 27.06.2006
(51) Int. Cl.: D06F 58/22, D06F 58/24

(54) **WÄSCHETROCKNER MIT EINEM FLUSENFILTER**
TUMBLE DRYER WITH A LINT FILTER
SECHE-LINGE POURVU D'UN FILTRE A PELUCHES

(30) Priorität: 29.07.2005 DE 102005035652
(43) Veröffentlichungstag der Anmeldung: 14.05.2008
(73) Patentinhaber: BSH Hausgeräte GmbH, 81739 München (DE)
(72) Erfinder: LÖFFLER, Holger, 10781 Berlin (DE); OTT, Henry, 13053 Berlin (DE); STEUSLOFF, Philipp, 10711 Berlin (DE)
(86) Internationale Anmeldenummer: PCT/EP2006/063608
(87) Internationale Veröffentlichungsnummer: WO 2007/012536

(56) Entgegenhaltungen:
- EP-A2- 1 548 178
- EP-B- 0 477 554
- WO-A2-2005/090669
- DE-A1- 4 304 372
- DE-A1- 10 058 141
- DE-A1- 10 148 700
- DE-C1- 10 002 742
- DE-U1- 29 608 272
- GB-A- 2 142 128
- GB-A- 2 269 445

## Beschreibung

Die Erfindung betrifft einen Wäschetrockner umfassend einen in einer horizontalen Richtung von einem Prozessluftstrom durchströmbaren Wärmetauscher und einen vor dem Wärmetauscher angeordneten und in einer vertikal fallenden Richtung von dem Prozessluftstrom durchströmbaren Abluftkanal, in welchem ein Flusenfilter angeordnet ist.

Ein solcher Wäschetrockner geht hervor aus der EP 0 477 554 B1, deren Inhalt im vollen Umfang vorliegender Offenbarung zuzurechnen ist. In diesem Wäschetrockner ist der von dem Prozessluftstrom angeströmte Wärmetauscher trotz des Flusenfilters, durch welchen ein großer Teil der während eines Trocknungsprozesses anfallenden Flusen aufgefangen werden, in erhöhtem Maße einer Beaufschlagung durch Flusen ausgesetzt, die der Prozessluftstrom aus einer Trommel mit zu trocknender Wäsche mitführt und die wegen ihrer geringen Größe nicht von dem Flusenfilter aufgefangen werden. Solche Flusen schlagen sich mit kondensierendem Wasserdampf in der Umgebung des Wärmetauschers nieder. Dabei bleiben die Flusen hauptsächlich im Anströmbereich des Wärmetauschers haften und bilden allmählich einen Filz, welcher den Prozessluftstrom fühlbar behindert und den Wärmeübergang im Inneren des Wärmetauschers verschlechtert. Dadurch kann die Wirksamkeit des Wäschetrockners erheblich beeinträchtigt werden. An einer Einströmseite des Wärmetauschers ist eine entnehmbare Gitterroste vorgesehen, an welcher sich die Flusen niederschlagen sollen und welche zur Entfernung der Flusen relativ einfach entnommen werden kann. Nach Entnahme der Gitterroste kann die Entfernung der Flusen von der Gitterroste durch Abspülen mit Wasser erfolgen.

Während damit zur Entfernung von Flusen, die sich unmittelbar am Wärmetauscher absetzen, eine durchaus praktikable Hilfe geschaffen ist, bleibt das Problem bestehen, dass sich Flusen an weiteren Stellen im Kanal für die Prozessluft zwischen der Trommel und dem Wärmetauscher ablagern. Insbesondere ist damit zu rechnen, dass Kondensation von Feuchte, die einsetzt, sobald der Prozessluftstrom die Trommel verlassen hat, das Niederschlagen von Flusen begünstigt. Solche Flusen schlagen sich insbesondere am tiefsten Teil des Kanals, wo eine Umlenkung der Prozessluft von einer vertikal fallenden Richtung in eine zum Wärmetauscher weisende horizontale Richtung erfordern muss, nieder.

Aus DE 100 02 742 C1 ist ein weiterer Wäschetrockner bekannt, welcher einen von einem Prozessluftstrom durchströmbaren Wärmetauscher und einen in einer vertikal fallenden Richtung von dem Prozessluftstrom durchströmbaren ersten Kanal umfasst, wobei zwischen dem ersten Kanal und dem Wärmetauscher entnehmbare Schale zum Sammeln von Flusen angeordnet ist.

Dementsprechend liegt vorliegender Erfindung die Aufgabe zugrunde, einen Wäschetrockner zu schaffen, in welchem möglichst alle zwischen der Trommel und dem Wärmetauscher sich niederschlagenden Flusen aufgefangen werden und bei Bedarf entsorgt werden können.

Zur Lösung dieser Aufgabe angegeben wird ein Wäschetrockner umfassend einen in einer horizontalen Richtung von einem Prozessluftstram durchströmbaren Wärmetauscher und einen vor dem Wärmetauscher angeordneten und in einer vertikal fallende Richtung von dem Prozessluftstrom durchströmbaren Abluftkanal, in welchem ein Flusenfilter angeordnet ist, bei welchem Wäschetrockner zwischen dem Abluftkanal und dem Wärmetauscher eine an den Wärmetauscher entnehmbar angesetzte und in der horizontalen Richtung sowie entgegen der vertikal fallenden Richtung offene Schale, welche als Umlenker für den Prozessluftstrom ausgebildet ist, angeordnet ist.

Somit schafft die Erfindung einen Wäschetrockner, bei welchem diejenige Einheit, welche an der am tiefsten liegenden Stelle des Abluftkanals für die Prozessluft zwischen einer Trommel des Wäschetrockners und dem Wärmetauscher anzuordnen ist, zum Auffangen aller dort anfallenden Flusen eingerichtet und zur Entsorgung solcher Flusen aus der Wärmetauschvorrichtung entnehmbar ist. Dadurch wird die regelmäßige Reinigung der am stärksten von einer Belastung mit Flusen betroffenen Stellen in einem Wäschetrockner möglich, und zur Entsorgung der Flusen ist es nicht einmal erforderlich, diese mit einem Finger oder einer Hand zu berühren.

Eine bevorzugte Ausgestaltung zeichnet sich dadurch aus, dass die Schale eine Gitterroste aufweist, mit welcher sie an den Wärmetauscher angesetzt ist. Hinsichtlich der Ausgestaltung einer solchen Gitterroste wird verwiesen auf die ganz in Bezug genommene EP 0 477 554 B1.

Ebenfalls bevorzugt ist es, dass die Schale mit einem Griff versehen ist, um eine einfache Handhabung zu gewährleisten. Vorzugsweise sind der Wärmetauscher und die Schale gemeinsam befestigbar, wobei dies mit besonderem Vorzug mittels einer

Verschlussvorrichtung erfolgt, welche außerhalb der Schale liegt. Auf diese Weise ist der Prozessluftstrom einer Beeinflussung durch diese Verschlussvorrichtung entzogen.

Ausführungsbeispiele der Erfindung werden nachfolgend anhand der Zeichnung erläutert. Im Einzelnen zeigen:
- Fig. 1:: eine Wärmetauschvorrichtung für einen Wäschetrockner;
- Fig. 2 und 3:: eine Schale für eine solche Wärmetauschvorrichtung;
- Fig. 4:: einen Wäschetrockner.

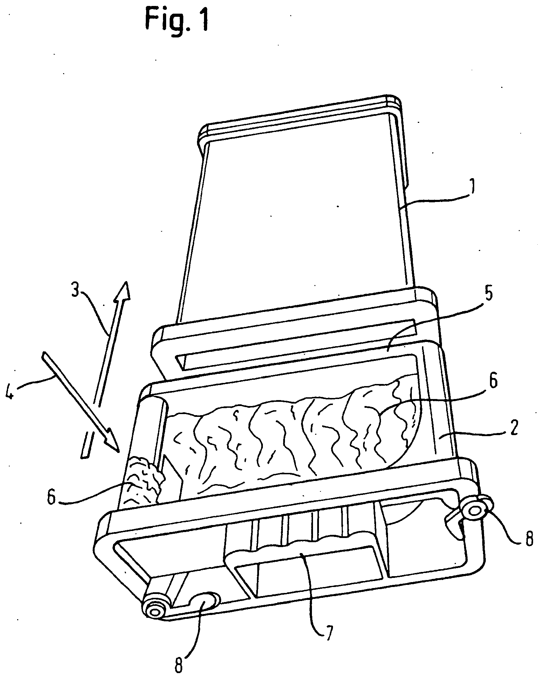

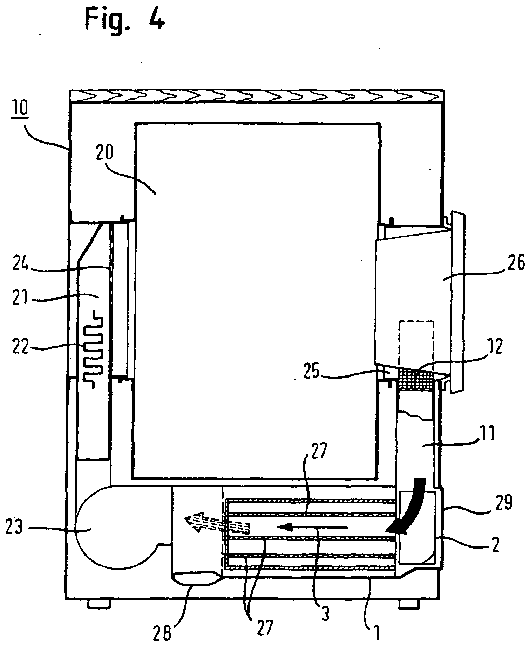

Fig. 1 zeigt eine Wärmetauschvorrichtung für einen Wäschetrockner, umfassend einen Wärmetauscher 1, welcher als herkömmlicher Kreuzstrom-Plattenwärmetauscher ausgebildet ist und in einer horizontalen Richtung 3 von dem Prozessluftstrom eines Wäschetrockners durchströmt werden muss. Vor dem Wärmetauscher 1 angesetzt ist eine Schale 2, welche als Umlenker für den Prozessluftstrom dient, der in einer vertikal fallenden Richtung 4, aus der Behandlungskammer des Wäschetrockners (vgl. Fig. 4) kommend, anströmt und in die horizontale Richtung 3 umgelenkt wird. Diese Schale 2 ist mit einer Gitterroste 5 an den Wärmetauscher 1 angesetzt und dient zum Auffangen von Flusen 6, welche hier als mehr oder weniger lockere und lose Masse dargestellt sind und von dem Prozessluftstrom trotz vorheriger Filterung (vgl. Figur 4) mitgeführt werden. Die Schale 2 bildet den tiefsten Punkt eines Kanals, durch den der Prozessluftstrom von der Trommel zum Wärmetauscher 1 gelangt, und kann somit weitgehend alle mitgeführten Flusen 6 sammeln. Wichtig ist auch die in Fig. 1 von den Flusen 6 verdeckte Gitterroste 5, welche die sich in der Nähe des Wärmetauschers 1 niederschlagenden Flusen 6 aufnimmt, damit diese durch Abspülen der Schale 2 unter Wasser entfernt werden können. Zur einfachen Handhabung ist die Schale 2 versehen mit einem Griff 7. Außerdem dargestellt ist eine Verschlussvorrichtung 8 umfassend zwei Hebel und (nicht sichtbare) Rasten, womit die Wärmetauschvorrichtung in einem Wäschetrockner einfach lösbar befestigbar ist.

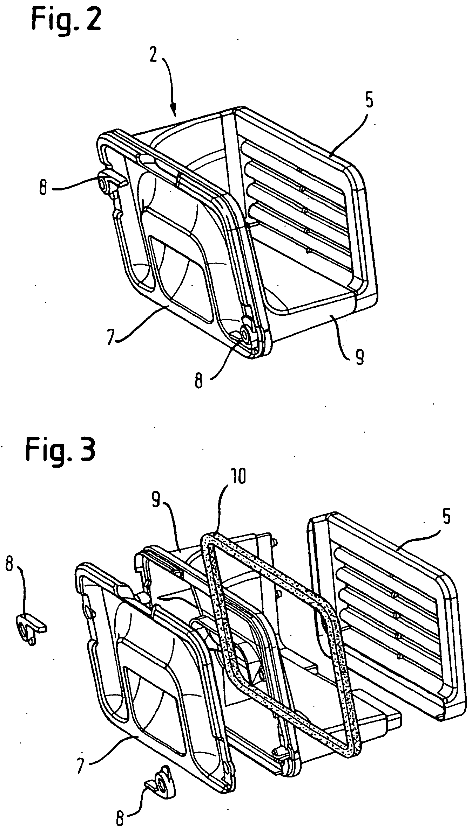

Die Figuren 2 und 3 zeigen den Aufbau der Schale 2. Die Schale 2 besteht aus der an den Wärmetauscher 1 (vgl. Fig. 1) anzusetzenden Gitterroste 5, an welche sich ein Korpusteil 9 anschließt. An dem Korpusteil 9 ist an einer der Gitterroste 5 abgewandten Seite der Griff 7 angesetzt, an welchem auch die Hebel der Befestigungsvorrichtung 8 angebracht sind oder werden. Zwischen den Griff 7 und den Korpus 9 eingefügt ist eine Dichtung 10, mit welcher der Kanal für den Prozessluftstrom im Bereich der Wärmetauschvorrichtung gegen die Umgebung abgedichtet werden kann.

Figur 4 zeigt eine Schnittansicht eines Wäschetrockners 10 umfassend eine Wärmetauscher 1 und eine Schale 2 wie in den vorigen Figuren dargestellt. Der Wäschetrockner 10 umfasst einen innen liegenden Trockenraum 20, der insbesondere als horizontal drehbar gelagerte Trommel ausgebildet ist. Zwischen dem Trockenraum 20 und einer Rückseite des Trockners 10 befindet sich ein Zuluftkanal 21, in dem der Prozessluftstrom mittels einer Heizeinrichtung 22 erwärmt und mittels eines Gebläses 23 durch eine gelochte Rückwand 24 in den Trockenraum 20 geblasen wird. An einer Vorderseite des Trockners 10 befindet sich eine Beschickungsöffnung 25, zum Einlagern der zu trocknenden Wäsche in den Trockenraum 20. Eine Tür 26 dient zum Verschließen des Trockenraums 20.

Der vom Gebläse 23 in den Trockenraum 20 und von dort in einen Ringspalt zwischen der Tür 26 und einer Berandung der Beschickungsöffnung 25 geblasene Prozessluftstrom tritt durch ein Flusensieb 12 in den Abluftkanal 11 ein, von wo er durch die Schale 2 in den Wärmetauscher 1 und zurück zum Gebläse 23 gelangt. Der Wärmetauscher 1 ist entlang der Strömungsrichtung 3 geschnitten dargestellt und enthält gut Wärme leitende Platten 27 mit Hohlräumen, die quer zum Prozessluftstrom von einem Kühlmedium, insbesondere frischer Kühlluft, durchströmt werden. Der Prozessluftstrom ist auf einer kalten Seite des Wärmetauschers 1 mit einem längs gestrichelten Pfeil, auf einer warmen Seite des Wärmetauschers 1 mit einem ausgefüllten Pfeil dargestellt. Der Prozessluftstrom gibt an den Platten 27 Wärme und Feuchtigkeit ab und gelangt gekühlt zum Gebläse 23. Die Feuchtigkeit sammelt sich am warmen Ende des Wärmetauschers 1 und fließt zu einem Kondensat-Sammelbehälter 28 ab, von wo sie abgepumpt oder anderweitig entsorgt werden kann. Über eine Klappe 29 sind die Schale 2 und der Wärmetauscher 1 zum Zwecke der Entnahme und Reinigung durch eine Bedienperson zugänglich.

Die Erfindung schafft eine einfache und handhabungssichere Möglichkeit zum weitgehend vollständigen Auffangen von Flusen, die in einem Wäschetrockner vom Prozessluftstrom mitgeführt werden, und unterstützt damit einen funktionssicheren und auch energiesparenden Betrieb eines entsprechend ausgestatteten Wäschetrockners.

## Patentansprüche

1. Wäschetrockner (10), umfassend einen in einer horizontalen Richtung (3) von einem Prozessluftstrom durchströmbaren Wärmetauscher (1) und einen vor dem Wärmetauscher (1) angeordneten und in einer vertikal fallenden Richtung (4) von dem Prozessluftstrom durchströmbaren ersten Kanal (9), in welchem ein Flusenfilter (12) angeordnet ist, **dadurch gekennzeichnet, dass** zwischen dem Kanal (11) und dem Wärmetauscher (1) eine an den Wärmetauscher (1) entnehmbar angesetzte und in der horizontalen Richtung (3) sowie entgegen der vertikal fallenden Richtung (4) offene Schale (2), welche als Umlenker für den Prozessluftstrom ausgebildet ist, angeordnet ist.

2. Wäschetrockner (10) nach Anspruch 1, bei dem die Schale (2) eine Gitterroste (5) aufweist, mit welcher sie an den Wärmetauscher (1) angesetzt ist.

3. Wäschetrockner (10) nach einem der vorigen Ansprüche, bei dem die Schale (2) einen Griff (7) aufweist.

4. Wäschetrockner (10) nach einem der vorigen Ansprüche, bei dem die Schale (2) entlang der horizontalen Richtung (3) entnehmbar ist.

5. Wäschetrockner (10) nach einem der vorigen Ansprüche, bei dem der Wärmetauscher (1) gemeinsam mit der Schale (2) befestigbar ist.

6. Wäschetrockner (10) nach Anspruch 5, in dem der Wärmetauscher (1) und die Schale (2) mit einer Verschlussvorrichtung (8) befestigbar sind, wobei die Verschlussvorrichtung (8) außerhalb eines den Prozessluftstrom beeinflussenden Bereichs der Schale (2) liegt.

## Claims

1. Tumble dryer (10), comprising a heat exchanger (1) through which a process air stream can flow in a horizontal direction (3) and a first duct (9) arranged upstream of the heat exchanger (1) and through which the process air stream can flow in a vertically falling direction (4), in which a lint filter (12) is arranged, **characterised in that**, between the duct (11) and the heat exchanger (1) is arranged a tray (2) which is mounted so that it can be removed from the heat exchanger (1) and is open in the horizontal direction (3) as well as counter to the vertically falling direction (4), and which tray (2) acts as a diverter for the process air stream.

2. Tumble dryer (10) according to claim 1, in which the tray (2) features a grating (5) with which it is mounted on the heat exchanger (1).

3. Tumble dryer (10) according to one of the preceding claims, in which the tray (2) features a grip (7).

4. Tumble dryer (10) according to one of the preceding claims, in which the tray (2) is removable in the horizontal direction (3).

5. Tumble dryer (10) according to one of the preceding claims, in which the heat exchanger (1) can be attached together with the tray (2).

6. Tumble dryer (10) according to claim 5, in which the heat exchanger (1) and the tray (2) can be attached with a securing device (8) with the securing device (8) lying outside an area of the tray (2) which influences the process-air stream.

## Revendications

1. Sèche-linge (10) comprenant un échangeur thermique (1) qui peut être traversé par un courant d'air de processus dans un sens horizontal (3) et un premier canal (9) situé en amont de l'échangeur thermique (1), pouvant être traversé par le courant d'air de processus dans un sens vertical descendant (4) et dans lequel est situé un filtre à peluches (12), **caractérisé en ce qu'**est située, entre le canal (11) et l'échangeur thermique (1), une coque (2) montée de manière amovible sur l'échangeur thermique (1) et ouverte dans le sens horizontal (3) et dans le sens opposé au sens vertical descendant (4), laquelle se présente sous la forme d'un déflecteur du courant d'air de processus.

2. Sèche-linge (10) selon la revendication 1, dans lequel la coque (2) présente une grille (5) au moyen de laquelle elle est montée sur l'échangeur thermique (1).

3. Sèche-linge (10) selon l'une des revendications précédentes, dans lequel la coque (2) comporte une poignée (7).

4. Sèche-linge (10) selon l'une des revendications précédentes, dans lequel la coque (2) peut être retirée dans le sens horizontal (3).

5. Sèche-linge (10) selon l'une des revendications précédentes, dans lequel l'échangeur thermique (1) et la coque (2) peuvent être fixés conjointement.

6. Sèche-linge (10) selon la revendication 5, dans lequel l'échangeur thermique (1) et la coque (2) peuvent être fixés au moyen d'un dispositif de fermeture (8), le dispositif de fermeture (8) se trouvant en dehors d'une zone de la coque (2) qui influence le courant d'air de processus (2).
